(19) Europäisches Patentamt
European Patent Office
Office européen des brevets

(11) **EP 4 265 409 A1**

(12) **EUROPEAN PATENT APPLICATION**
published in accordance with Art. 153(4) EPC

(43) Date of publication:
**25.10.2023 Bulletin 2023/43**

(21) Application number: **21911451.9**

(22) Date of filing: **20.12.2021**

(51) International Patent Classification (IPC):
**B32B 15/01** (2006.01)   **B32B 7/12** (2006.01)

(52) Cooperative Patent Classification (CPC):
**B32B 7/12; B32B 15/01**

(86) International application number:
**PCT/KR2021/019437**

(87) International publication number:
**WO 2022/139384 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.12.2020 KR 20200180114**

(71) Applicant: POSCO Co., Ltd
**Pohang-si, Gyeongsangbuk-do 37859 (KR)**

(72) Inventors:
• PARK, Jong-Tae
**Pohang-si, Gyeongsangbuk-do 37859 (KR)**
• KIM, Jungwoo
**Pohang-si, Gyeongsangbuk-do 37859 (KR)**
• HA, Bongwoo
**Pohang-si, Gyeongsangbuk-do 37859 (KR)**
• LEE, Donggyu
**Pohang-si, Gyeongsangbuk-do 37859 (KR)**

(74) Representative: **Meissner Bolte Partnerschaft
mbB
Widenmayerstrasse 47
80538 München (DE)**

(54) **SELF-BONDING ELECTRICAL STEEL SHEET AND LAMINATE COMPRISING SAME**

(57) The present invention relates to a self-bonding electrical steel sheet and a laminate comprising same, the self-bonding electrical steel sheet comprising an electrical steel sheet and a self-bonding layer positioned on the electrical steel sheet, wherein the amount of inorganic material in the self-bonding layer is 5-35 wt% and the tensile/shear strength of the laminate is 7.5-20 N/mm$^2$.

## FIG. 1

**EP 4 265 409 A1**

**Description**

**[Technical Field]**

The present invention relates to an electrical steel sheet laminate. More particularly, the present invention relates to an electrical steel sheet laminate in which a polymer adhesive layer capable of bonding (fastening) an electrical steel sheet is formed without using existing fastening methods, such as welding, clamping, and interlocking.

**[Background Art]**

Non-oriented electrical steel sheets are steel sheets with uniform magnetic properties in all directions on a rolled sheet and have been widely used in motors, iron cores of generators, electric motors, and small transformers.

Electrical steel sheets may be divided into two types: one is an electrical steel sheet on which stress relief annealing (SRA) needs to be performed to improve magnetic properties after punching and the other is an electrical steel sheet on which SRA is omitted when cost loss due to heat treatment is greater than the magnetic property effect by SRA.

An insulating coating is a coating applied in a finishing manufacturing process of laminates, such as motors, iron cores of generators, electric motors, and small transformers, and generally requires electrical properties to suppress the occurrence of eddy currents. In addition, continuous punching workability, adhesion resistance, and surface adhesion are required. Continuous punching workability refers to the ability to suppress wear of a mold when forming an iron core by stacking a plurality of electrical steel sheets after punching into a predetermined shape.

Adhesion resistance refers to the ability to prevent adhesion between iron core steel sheets after the SRA process in which the magnetic properties are restored by removing the working stress of the steel sheet.

In addition to these basic properties, excellent application workability of a coating solution and solution stability that allows the use for a long time after mixing are also required. Such an insulating coating may be manufactured as an electrical steel sheet laminate by using a separate fastening method, such as welding, clamping, or interlocking.

**[Disclosure]**

**[Technical Problem]**

The present invention attempts to provide an electrical steel sheet laminate including a polymer adhesive layer capable of bonding (fastening) electrical steel sheets without using existing fastening methods, such as welding, clamping, and interlocking, and a manufacturing method thereof.

**[Technical Solution]**

An exemplary embodiment of the present invention includes: an electrical steel sheet; and a self-bonding layer positioned on the electrical steel sheet, wherein a content of an inorganic material in the self-bonding layer is 5 to 35 wt%.

An electrical steel sheet for self-bonding, which satisfies Equation 1 below, is provided.

$$[\text{Equation 1}]$$

$$6.7 \leq A/B \leq 36.4$$

wherein A is a curing temperature (°C) when the self-bonding layer is formed on the electrical steel sheet, and B is the content (wt%) of the inorganic material in the self-bonding layer.

The curing temperature may be 180 to 250 °C.

A thickness of the bonding layer may be 1.9 to 5.4 $\mu$m.

Another exemplary embodiment of the present invention includes: a plurality of electrical steel sheets; and a self-bonding layer positioned between the electrical steel sheets, wherein a content of an inorganic material in the self-bonding layer is 5 to 35 wt%.

The laminate may satisfy Equation 1 below.

[Equation 1]

$$6.7 \leq A/B \leq 36.4$$

A is a curing temperature (°C) when the self-bonding layer is formed on the electrical steel sheet, and
B is the content (wt%) of the inorganic material in the self-bonding layer.

A peel strength of the laminate may be 1.0 to 5.4 N/mm.

A high-temperature adhesive strength (150 °C or higher) of the laminate may be 1 to 10 MPa.

A tensile/shear strength of the laminate may be 7.5 to 20 N/mm$^2$.

A resoftening temperature of the laminate (a temperature at which a bonding strength is maintained at 50%) may be 140 °C or higher.

A damping ratio of the laminate may be 0.015 or more.

A method of manufacturing an electrical steel sheet laminate for self-bonding includes: forming a self-bonding layer on an electric steel sheet by applying a coating composition including 65 to 95 wt% of resin and 5 to 35 wt% of at least one inorganic nanoparticles among $SiO_2$, $TiO_2$, and ZnO as a solid content to a steel sheet and curing the coating composition by heat treatment at a curing temperature of 180 to 250 °C based on a pick metal temperature (PMT), at a heating rate of 3 to 50 °C/sec. from the application of the coating composition to the curing temperature, and with temperature deviation adjusted to 10 °C or less from a holding temperature ranging from 180 to 250 °C; and laminating the electrical steel sheet on which the self-bonding layer is formed.

[Advantageous Effects]

According to an exemplary embodiment of the present invention, electrical steel sheets may be bonded without using existing fastening methods, such as welding, clamping, and interlocking, so that the electrical steel sheet laminate has excellent magnetic properties.

[Description of the Drawings]

FIG. 1 is a schematic diagram of an electrical steel sheet laminate.
FIG. 2 is a schematic view of a cross-section of an electrical steel sheet laminate according to an exemplary embodiment of the present invention.

[Mode for Invention]

Hereinafter, exemplary embodiments of the present invention will be described in detail. However, the exemplary embodiments are presented as examples, and the present invention is not limited thereby and is only defined by the scope of the claims to be described later.

Hereinafter, exemplary embodiments of the present invention will be described in detail. However, the exemplary embodiments are presented as examples, and the present invention is not limited thereby and is only defined by the scope of the claims to be described later.

In an exemplary embodiment of the present invention, an electrical steel sheet having a self-bonding layer on a surface thereof is provided.

A plurality of such electrical steel sheets may be laminated and thermally fused to produce an electrical steel sheet laminate without a separate process.

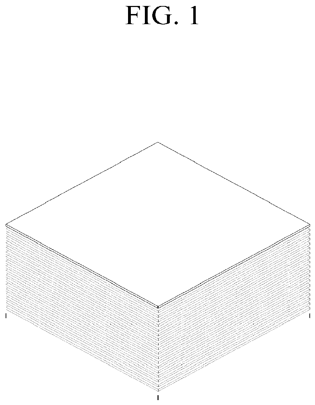

More specifically, the electrical steel sheet laminate includes a plurality of electrical steel sheets; and a self-bonding layer positioned between the plurality of electrical steel sheets. FIG. 1 shows a schematic diagram of an electrical steel sheet laminate according to an exemplary embodiment of the present invention. As shown in FIG. 1, a plurality of electrical steel sheets are stacked.

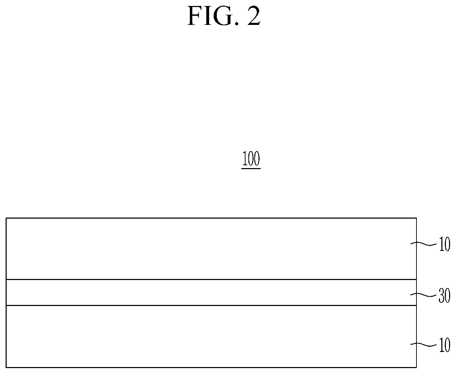

FIG. 2 shows a schematic view of a cross-section of an electrical steel sheet laminate according to an exemplary embodiment of the present invention. As shown in FIG. 2, an electrical steel sheet laminate 100 according to an exemplary embodiment of the present invention includes a plurality of electrical steel sheets 10; and a self-bonding layer 30 positioned between the plurality of electrical steel sheets.

The electrical steel sheet laminate according to an exemplary embodiment of the present invention may be a laminate in which different electrical steel sheets are thermally fused by forming a self-bonding layer simply using the adhesive coating composition described above, without using existing methods, such as welding, clamping, and interlocking.

At this time, the electrical steel sheet laminate has excellent properties, such as high-temperature adhesion and high-temperature oil resistance even after thermal fusion.

Hereinafter, each component will be described in detail.

As the electrical steel sheet 10, a general non-oriented or oriented electrical steel sheet may be used without limitation. In an exemplary embodiment of the present invention, since the main configuration is to manufacture the electrical steel sheet laminate 100 by forming the self-bonding layer 30 between a plurality of electrical steel sheets 10, detailed description of the electrical steel sheet 10 is omitted.

The self-bonding layer 30 is formed between the plurality of electrical steel sheets 10, and has adhesive strength strong enough to bond the plurality of electrical steel sheets 10 without using existing fastening methods, such as welding, clamping, and interlocking.

When a plurality of electrical steel sheets 10 having the self-bonding layer are laminated and thermally fused, resin components in the self-bonding layer are thermally fused to form an adhesive layer.

In the adhesive layer, an inorganic metal compound is included in a main component of an organic material. In the adhesive layer, inorganic components may be uniformly dispersed in the organic material to form a microphase.

More specifically, the electrical steel sheet according to an exemplary embodiment of the present invention may be an electrical steel sheet for self-bonding, which includes the electrical steel sheet; and the self-bonding layer positioned on the electrical steel sheet, wherein a content of an inorganic material in the self-bonding layer is 5 to 35 wt% and Equation 1 below is satisfied.

[Equation 1]

$$6.7 \leq A/B \leq 36.4$$

A is a curing temperature (°C) when the self-bonding layer is formed on the electrical steel sheet, and B is the content (wt%) of the inorganic material in the self-bonding layer.

The curing temperature is related to a temperature in a thermal fusion process when manufacturing the laminate later. More specifically, in order to maintain a thermal fusion temperature in a subsequent stage at a high temperature, it is necessary to maintain the curing temperature at a high temperature.

The high-temperature conditions of the thermal fusion step may have an effect of improving high-temperature characteristics of the laminate later.

In addition, another method for improving high-temperature properties is to control the content of inorganic materials in the bonding layer.

An increase in the content of the inorganic material may improve the high-temperature properties, but may adversely affect the factors related to adhesion. Specifically, the increase in the content of the inorganic material has a negative effect on peel strength.

These two factors have to be appropriately coordinated to satisfy both high-temperature properties and adhesive properties so that the laminate may be used as a laminate for an EV motor.

The above factors may be obtained by applying a coating composition including 65 to 95 wt% of resin and 5 to 35 wt% of at least one inorganic nanoparticles among $SiO_2$, $TiO_2$, and ZnO as a solid content to a steel sheet and curing the coating composition by heat treatment at a curing temperature of 180 to 250 °C based on a pick metal temperature (PMT), at a heating rate of 3 to 50 °C/sec. from the application of the coating composition to the curing temperature, and with temperature deviation adjusted to 10 °C or less from a holding temperature ranging from 180 to 250 °C. At this time, the temperature deviation of the steel sheet may be based on the area of the steel sheet of 2500 $mm^2$ or more ($50 \times 50$ $mm^2$).

An average particle diameter of $SiO_2$ may be 10 to 30 nm, an average particle diameter of $TiO_2$ may be 30 to 50 nm, and an average particle diameter of ZnO may be 70 to 100 nm.

The resin may be an epoxy-based resin, may have a weight average molecular weight of 8,000 to 15,000 g/mol, and may have a glass transition temperature of 70 to 90 °C.

The holding time of the curing temperature may be 1 second or more.

Each factor will be described in detail below.

Curing temperature

The curing temperature of the self-bonding product is 180 to 250 °C.

The temperature may be within a range considering anti-sticky properties and field workability during the coating operation.

If the curing temperature of the self-bonding product is less than 180°C, bonding layers may stick to each other during coil winding after in-line coating. Meanwhile, if the curing temperature is higher than 250 °C, the bonding layer may deteriorate or become hard, resulting in inferior fastening force.

In order to control the curing temperature, the amount of curing agent added to a bonding solution may be controlled. When 0.01 to 10 wt% of the curing agent is included based on the total wt%, the curing temperature in the above range may be satisfied. The type of curing agent used in this case may be polyisocyanate, polycarbodiimide, aziridine, melamine, cycloaliphatic amine, and aromatic amine.

The curing temperature of the self-bonding product was measured by a non-contact thermocouple (TC) for a pick metal temperature (PMT) of the material.

Coating thickness

A coating thickness of the self-bonding product is 1.9 to 5.4 $\mu$m. If the coating thickness is less than 1.9 $\mu$m, adhesive strength may be inferior and insulation breakdown may occur in a high frequency region. Meanwhile, if the coating thickness is too large, a motor core stacking factor may be inferior.

If the coating thickness is less than 1.9 $\mu$m, insulation breakdown between the sheet cores occurs when the motor rotates at a high speed, resulting in reduced motor efficiency. In addition, if the coating thickness is greater than 5.4 $\mu$m, the coating layer thickness may excessively increase, so that the bonding layer may flow out to the side during a motor core assembly process and a stacking factor of the motor core may decrease.

The coating thickness may be controlled by the physical properties (specific gravity, viscosity, solid content) of the bonding solution. When the bonding solution includes a specific gravity of 1.05 to 1.4, a viscosity (cps) of 5 to 100, or a solid content (wt%) of 5 to 50, the above range of coating thickness may be satisfied.

The coating thickness was measured by a Fourier Transform Infra-Red Spectroscopy (FT-IR) coating thickness meter. The FT-IR is an analysis method using the properties of molecules to absorb frequencies corresponding to the natural frequency thereof, which is based on a principle of reading a spectrum of a wavelength detected by reflecting infrared rays to a material.

Peel strength (T-peel)

A peel strength (T-peel) of the bonding layer is 1.0 to 5.4 N/mm based on T-peel strength at room temperature. This is a range considering workability when assembling the motor after manufacturing the bonding core.

If the peel strength is less than 1.0 N/mm based on room temperature (25°C), fastening force may be inferior when manufacturing the bonding core.

Meanwhile, if the peel strength exceeds 5.4 N/mm, the peel strength is too strong, resulting in poor workability during motor assembly.

Peel strength may be controlled by a polymer chain type and coating thickness. When the ratio of linear and branched polymer chains is 50 to 99 wt% and the coating thickness is 1.0 to 10 $\mu$m based on 100 wt% of the bonding solution, the peel strength in the above range may be satisfied.

The peel strength was a value measured by ASTM D1876 [measured by a universal testing system after thermally fusing two sheets of specimen having a size of 200 mm $\times$ 25 mm].

More specifically, the peel strength is 2.6 to 5.4 N/mm.

High-temperature adhesive strength (150°C or higher)

The high-temperature adhesive strength (150 °C or more) has a shear adhesive strength of 1 to 10 MPa based on 180 °C. This is the range considering workability when manufacturing the bonding core.

If the high-temperature adhesive strength (150 °C or more) is less than 1 MPa based on 180 °C, not only the fastening force when manufacturing the bonding core may be inferior, but also the ATF resistance may be inferior. Meanwhile, if the high-temperature adhesive strength exceeds 10 MPa, workability may deteriorate when manufacturing the bonding core because thermal fusion should be performed at a high temperature for high-temperature adhesive strength.

The high-temperature adhesive strength may be controlled by the type of polymer chain and the curing temperature of the coating. When the ratio of the network type or crosslinked polymer chain is 50 to 99 wt% based on 100 wt% of the bonding solution and the curing temperature is 150 to 300 °C, the high-temperature adhesive strength in the above range may be satisfied.

The high-temperature adhesive strength was a value measured using a universal testing system. The high-temperature adhesive strength was a value measured in accordance with the ISO 4586 standard after preparing two specimens (thickness: 0.27mmt, size: 100 $\times$ 25mm), overlapping both ends of the specimens by 12.5 mm, and performing thermal fusion to prepare a sample for measuring a shear adhesive length, and maintaining the prepared sample at 150 °C or higher for 1 minute.

(Tensile) adhesive strength

Tensile adhesive strength of the sheet bonding layer is 7.5 to 20 $N/mm^2$ at room temperature.

If the tensile adhesive strength of the product is less than 7.5 $N/mm^2$ based on room temperature, fastening force may be inferior when manufacturing the bonding core. Meanwhile, if the tensile strength exceeds 20 $N/mm^2$, the tensile strength is too strong, resulting in poor workability when manufacturing the bonding core.

The tensile adhesive strength may be controlled by a bonding core fusion temperature. When manufacturing the bonding core, the thermal fusion temperature may satisfy tensile strength in the above range of 100 °C to 250 °C. At this time, the required thermal fusion pressure is 1.0 to 5 $N/mm^2$.

The tensile strength was a value obtained with 50 mm × 50 mm × 10 mm by universal testing system at room temperature after thermal fusion at 100 °C to 250 °C presented above.

Resoftening temperature (temperature at which 50% of bond strength is maintained)

The resoftening temperature (temperature at which the bond strength is maintained at 50%) may be 140 °C or higher. More specifically, it may be 140 to 250 °C.

If the resoftening temperature (temperature at which the bonding strength is maintained at 50%) is less than 140 °C, a motor failure rate may increase due to inferior fastening strength during motor assembly (magnet insertion and varnish impregnation, etc.). Meanwhile, if the resoftening temperature exceeds 250 °C, workability may deteriorate due to the need for a high thermal fusion temperature in manufacturing the bonding core.

The resoftening temperature may be controlled by the type of polymer chain and the content of the inorganic material included in the coating layer. When the proportion of the network or cross-linked polymer chain is 50 to 99 wt% based on 100 wt% of the bonding solution and the content of inorganic materials included in the coating layer is 1 to 60 wt%, the resoftening temperature in the above range (a temperature at which 50% of bond strength is maintained) may be satisfied.

The resoftening temperature (the temperature at which 59 % of the bond strength is maintained) was expressed as a temperature when the value measured by the universal testing system was maintained as 50%). The temperature is a temperature at which a value measured in accordance with the ISO 4587 standard after preparing a sample for measuring shear adhesive strength and then maintaining the prepared sample for 1 minute at each temperature is 50% of the value measured at room temperature.

Axial vibration damping ratio of bonding core

Axial vibration damping ratio of the bonding core (vibration damping ratio measured by frequency response function (FRF) meter) may be 0.015 or more.

More specifically, it may be 0.015 to 0.9.

If the axial damping ratio of the bonding core is less than 0.015, rigidity of the bonding core may increase, resulting in inferior noise/vibration when the motor is actually driven. Meanwhile, if the axial damping ratio exceeds 0.9, the coating thickness should be thick, which may lead to poor economic efficiency and stacking factor of the bonding core.

The axial damping ratio of the bonding core may be controlled by the type of polymer chain and the thickness of the coating. When the ratio of linear or branched polymer chains is 50 to 99 wt% based on 100 wt% of the bonding solution and the coating thickness is 1.0 to 10.0 $\mu$m, the above range of axial damping ratio of the bonding core may be satisfied.

The axial damping ratio of the bonding core was expressed as a damping ratio value measured by an FRF automatic measurement system.

Shear adhesive strength

The shear adhesive strength of the self-bonding product is 1.0 MPa or more and 30 MPa or less. The shear adhesive strength of the self-bonding product at 180 °C is preferably 4.8 MPa or more and 17 MPa or less to prevent assembly defects due to thermal shock in the motor assembly process.

If the shear adhesive strength is too low, adhesion to the side of the core and to the slot portion during manufacture of the motor core may not be made, resulting in defects in the motor assembly process and increased noise/vibration of the motor. Meanwhile, if the shear adhesive strength is too high, it may not be easy to separate the core in the case of fusion in a mold because adhesive strength is too high, thereby reducing productivity.

The shear adhesive strength may be controlled by the content of the inorganic material included in the polymer resin. When 0.1 to 60 wt% of the inorganic material is included based on the total wt%, shear adhesive strength within the above range may be satisfied. The types of inorganic materials used in this case are nano-scale silica particles and metal phosphate alone or a mixture of the two inorganic materials.

Shear adhesive strength was a value measured using a universal testing machine. The shear adhesive strength was a value measured in accordance with the ISO 4587 standard after preparing two specimens (thickness: 0.27mmt, size: 100 × 25mm), overlapping both ends of the specimens by 12.5 mm, and then performing fusion under certain conditions (temperature: 220 °C, pressure: 3MPa, time: 30 minutes).

Surface insulation resistance

Surface insulation resistance of self-bonding products is 70 to 400 $\Omega$·mm$^2$/lam. If the coating thickness is too large to secure high insulation resistance, a stacking factor of the motor core may be inferior. If the coating thickness is too small, in the case of a drive motor operating in a high-frequency region, a insulation breakdown phenomenon between sheet cores may occur, resulting in a decrease in motor efficiency.

If the surface insulation resistance is less than 70 $\Omega$·mm$^2$/lam., insulation breakdown between the sheet cores may occur when the motor rotates at a high speed, thereby degrading the motor efficiency. Also, if the surface insulation resistance exceeds 400 $\Omega$·mm$^2$/lam., the thickness of the coating layer may be excessively large, resulting in defects in assembling the motor core, as well as deterioration in the stacking factor of the motor core.

The surface insulation resistance may be controlled by the coating thickness applied to one side of the self-bonding product and the content of inorganic materials in the coating layer. When the coating thickness applied to one surface is 1.0 to 6.0 $\mu$m, the surface insulation resistance within the above range may be satisfied. In addition, when the coating thickness is limited to 1.5 to 2.5 $\mu$m and the content of the inorganic material includes 3 to 60 wt% of inorganic material based on the total wt%, surface insulation resistance within the above range may be satisfied.

The types of inorganic materials used in this case are nano-scale silica particles and metal phosphate alone or a mixture of the two inorganic materials.

The surface insulation resistance is a resistance value converted from a current value measured by the Franklin Insulation Tester by the formula (Ri (insulation resistance) = 645 ((1/I (current mA)) - 1) $\Omega$ mm$^2$/lam.). This measuring instrument, as a single-plate test method device, is a device (ASTM A717) that measures the surface insulation resistance of the electrical steel sheet under constant pressure and constant voltage, has a range of current of 0 to 1.000 Amp, and performs measurement under constant pressure (20.4 atm).

Hereinafter, preferred examples and comparative examples of the present invention are described. However, the following examples are only preferred examples of the present invention, and the present invention is not limited by the following examples.

[Experimental Example 1]

A non-oriented electrical steel sheet (50 × 50 mm, 0.35 mmt) was prepared as a blank specimen. An adhesive coating solution was applied to top and bottom of each prepared blank specimen to have a constant thickness (about 5.0$\mu$m) using a bar coater or roll coater, cured at 220 °C for 20 seconds based on a pick metal temperature (PMT), and then cooled slowly in the air to form an adhesive coating layer. At this time, it was heated at a heating rate of 30 °C/sec to a curing temperature, and a temperature deviation was controlled within 5 °C at 220 °C.

After laminating electrical steel sheets coated with the adhesive coating layer to a height of 20 mm, the electrical steel sheets were thermally fused at 120 °C for 10 minutes by pressing with a force of 0.1 MPa. Components of a thermally fused layer and various characteristics of the thermally fused electrical steel sheet are summarized in Tables 1 to 3 below.

A composition of the coating solution used in this case is as follows. The content of the inorganic materials used was adjusted and tested as shown in the table below.

Components of the applied bonding solution are indicated below. A resin used in the examples is an epoxy-based resin and has a molecular weight of 10,000 g/mol and a glass transition temperature of 80 °C. In addition, as inorganic materials, SiO$_2$, TiO$_2$, and ZnO were used alone or in combination of two or more, and the sizes of inorganic nanoparticles were SiO$_2$ of 15nm, TiO$_2$ of 40nm, and ZnO of 80nm, respectively. Wt% of the resin and inorganic materials is wt% of solid content excluding water or solvent contained in the solution.

(Table 1)

|  | Comparative Example 1 | Example 1 | Example 2 | Example 3 | Example 4 | Example 5 | Example 6 | Comparative Example 2 | Comparative Example 3 |
|---|---|---|---|---|---|---|---|---|---|
| Solid content of resin wt% | 70 | 75 | 90 | 65 | 85 | 95 | 80 | 97 | 65 |
| Solid content of inorganic material wt% | 30 | 25 | 10 | 35 | 15 | 5 | 20 | 3 | 35 |

(Table 2)

| | Comparative Example 1 | Example 1 | Example 2 | Example 3 | Example 4 | Example 5 | Example 6 | Comparative Example 2 | Comparative Example 3 |
|---|---|---|---|---|---|---|---|---|---|
| coating thickness ($\mu$m) | 4.4 | 4.5 | 5.4 | 2.8 | 1.9 | 3.6 | 4.2 | 1.8 | 3.6 |
| Content of inorganic material (wt%) | 30 | 25 | 10 | 35 | 15 | 5 | 20 | 3 | 45 |
| Curing temperature (°C) | 168 | 202 | 198 | 235 | 210 | 182 | 240 | 180 | 298 |
| Curing temperature/content of inorganic material (°C/wt%) | 5.6 | 8.1 | 19.8 | 6.7 | 14 | 36.4 | 12 | 60 | 6.6 |
| peel strength (N/mm) | 2 | 2.6 | 3.8 | 1.5 | 5.4 | 3.1 | 4.3 | 0.3 | 0.1 |
| High-temperature adhesive strength (MPa) | 6.2 | 5.2 | 3.4 | 4.3 | 1.5 | 5.0 | 7.2 | 0.7 | 0.5 |
| damping ratio | 0.12 | 0.15 | 0.24 | 0.43 | 0.21 | 0.25 | 0.18 | 0.005 | 0.009 |
| Tensile shear strength (N/mm$^2$) | 6.4 | 11.2 | 14.2 | 18.2 | 7.5 | 12.5 | 10.8 | - | - |
| Resoftening temperature (%) | 157 | 182 | 153 | 132 | 140 | 168 | 186 | 123 | 108 |
| Shear adhesive strength (MPa) | 14.9 | 4.8 | 16.5 | 15.5 | 12.4 | 9.8 | 17.9 | 0.8 | 1.4 |
| Surface insulation resistance ($\Omega$) | 103 | 154 | 208 | 250 | 350 | 79 | 198 | 5.2 | 10.3 |
| Comprehensive evaluation | B | A | A | A | A | A | A | C | C |

< Comprehensive evaluation >

Comprehensive evaluation criteria: Peel strength $\times$ high-temperature adhesive strength $\times$ tensile/shear strength were evaluated as main factors.

As shown in Tables 1 and 2, it was confirmed that the self-bonding products and bonding layers according to Examples 1 to 6 simultaneously satisfy peel strength and high-temperature adhesive strength compared to the self-bonding products and bonding layers related to Comparative Examples 1 to 3.

In addition, since the shear and tensile adhesive strengths were high and the curing temperature was high, all of the comprehensive evaluations were "A".

It can be seen that the comparative examples do not satisfy two or more characteristics to be applied to actual motor products.

[Experimental Example 2]

Experimental Example 2 was carried out in the same manner as that of Experimental Example 1, except that the composition of the coating solution of Example 3 was used, and the curing temperature at the time of application of the coating solution, the heating rate up to the curing temperature, and the temperature deviation in the specimen were adjusted as shown in Table 3.

(Table 3)

| | Example 7 | Example 8 | Example 9 | Example 10 | Example 11 | Comparative Example 4 | Comparative Example 5 | Comparative Example 6 | Comparative Example 7 | Comparative Example 8 |
|---|---|---|---|---|---|---|---|---|---|---|
| Curing temperature (°C) | 180 | 250 | 200 | 230 | 85 | 160 | 280 | 200 | 220 | 200 |
| Heating rate (°C/sec.) | 20 | 35 | 3 | 50 | 25 | 35 | 30 | 1 | 70 | 35 |
| temperature deviation (°C) | 2 | 4 | 6 | 8 | 10 | 4 | 6 | 6 | 4 | 15 |

(Table 4)

| | Example 7 | Example 8 | Example 9 | Example 10 | Example 11 | Comparative Example 4 | Comparative Example 5 | Comparative Example 6 | Comparative Example 7 | Comparative Example 8 |
|---|---|---|---|---|---|---|---|---|---|---|
| coating thickness ($\mu$m) | 4.3 | 3.5 | 3.9 | 4.3 | 3.8 | 4.1 | 4.0 | 3.7 | 3.2 | 3.4 |
| Content of inorganic material (wt%) | 35 | 35 | 35 | 35 | 35 | 35 | 35 | 35 | 35 | 35 |
| Curing temperatu re (°C) | 180 | 250 | 200 | 230 | 85 | 160 | 280 | 200 | 220 | 200 |
| Curing temperatu re/ content of inorganic material (°C/wt%) | 5.1 | 7.1 | 5.7 | 6.6 | 2.4 | 4.6 | 8.0 | 5.7 | 6.3 | 5.7 |
| peel strength (N/mm) | 5.2 | 4.9 | 3.8 | 4.6 | 3.4 | 2.1 | 1.0 | 0.5 | 0.7 | 0.8 |
| High-temperatu re adhesive strength (MPa) | 6.3 | 7.2 | 4.2 | 5.3 | 6.4 | 1.2 | 0.2 | 0.4 | 0.6 | 0.9 |
| damping ratio | 0.12 | 0.15 | 0.09 | 0.13 | 0.11 | 0.16 | 0.18 | 0.18 | 0.009 | 0.18 |
| Tensile shear strength (N/mm$^2$) | 11.2 | 10.5 | 12.0 | 8.9 | 13.2 | 6.5 | 2.3 | 1.3 | 3.2 | 5.1 |
| Resoftenin 9 temperatu re (%) | 167 | 172 | 163 | 152 | 160 | 168 | 202 | 135 | 198 | 187 |
| Shear adhesive strength (MPa) | 8.5 | 7.5 | 6.8 | 9.4 | 10.2 | 4.1 | 2.5 | 3.1 | 2.7 | 3.4 |
| Surface insulation resistance ($\Omega$) | 152 | 144 | 185 | 150 | 250 | 179 | 198 | 153 | 187 | 169 |
| Comprehe nsive evaluation | A | A | A | A | A | B | B | B | B | B |

EP 4 265 409 A1

12

In the case of the examples, it is confirmed that all characteristics are excellent. Meanwhile, in the case of Comparative Examples 4 to 8, it can be seen that two or more characteristics are not satisfied to be applied to actual motor products.

The present invention is not limited to the above exemplary embodiments, but may be manufactured in a variety of different forms, and those skilled in the art to which the present invention pertains may understand that the present invention may be implemented in other specific forms without changing the technical spirit or essential features of the present invention. Therefore, the exemplary embodiments described above should be understood as illustrative in all respects and not limiting.

**Claims**

1. An electrical steel sheet laminate for self-bonding, the electrical steel sheet laminate comprising:

    a plurality of electrical steel sheets; and
    a self-bonding layer positioned between the electrical steel sheets,
    wherein a content of an inorganic material in the self-bonding layer is 5 to 35 wt%, and
    a tensile/shear strength of the laminate is 7.5 to 20 N/mm$^2$.

2. The electrical steel sheet laminate of claim 1, wherein:

    the laminate satisfies Equation 1 below.

$$[\text{Equation 1}]$$

$$6.7 \leq A/B \leq 36.4$$

    wherein A is a curing temperature (°C) when the self-bonding layer is formed on the electrical steel sheet, and
    B is the content (wt%) of the inorganic material in the self-bonding layer.

3. The electrical steel sheet laminate of claim 1, wherein:
    a high-temperature adhesive strength (150 °C or higher) of the laminate is 1 to 10 MPa.

4. The electrical steel sheet laminate of claim 1, wherein:
    a peel strength of the laminate is 1.0 to 5.4 N/mm.

5. The electrical steel sheet laminate of claim 1, wherein:
    a resoftening temperature of the laminate (a temperature at which a bonding strength is maintained at 50%) is 140 °C or higher.

6. The electrical steel sheet laminate of claim 1, wherein:
    a damping ratio of the laminate is 0.015 or more.

7. A method of manufacturing an electrical steel sheet laminate for self-bonding, the method comprising:

    forming a self-bonding layer on an electric steel sheet by applying a coating composition including 65 to 95 wt% of resin and 5 to 35 wt% of at least one inorganic nanoparticles among $SiO_2$, $TiO_2$, and ZnO as a solid content to a steel sheet and curing the coating composition by heat treatment at a curing temperature of 180 to 250 °C based on a pick metal temperature (PMT), at a heating rate of 3 to 50 °C/sec. from the application of the coating composition to the curing temperature, and with temperature deviation adjusted to 10 °C or less from a holding temperature ranging from 180 to 250 °C; and
    laminating the electrical steel sheet on which the self-bonding layer is formed.

FIG. 1

FIG. 2

<u>100</u>

10

30

10

## INTERNATIONAL SEARCH REPORT

| International application No. |
|---|
| **PCT/KR2021/019437** |

### A. CLASSIFICATION OF SUBJECT MATTER

**B32B 15/01**(2006.01)i; **B32B 7/12**(2006.01)i

According to International Patent Classification (IPC) or to both national classification and IPC

### B. FIELDS SEARCHED

Minimum documentation searched (classification system followed by classification symbols)

B32B 15/01(2006.01); B32B 27/00(2006.01); B32B 27/38(2006.01); B32B 37/06(2006.01); B32B 7/12(2006.01); C09J 163/00(2006.01); H01F 3/02(2006.01); H01F 41/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전기강판(electrical sheet), 고분자 접착층(polymer adhesive layer), 인장(tensile), 경화온도(hardening temperature)

### C. DOCUMENTS CONSIDERED TO BE RELEVANT

| Category* | Citation of document, with indication, where appropriate, of the relevant passages | Relevant to claim No. |
|---|---|---|
| X | KR 10-2019-0077985 A (POSCO) 04 July 2019 (2019-07-04)<br>See paragraphs [0007], [0018], [0029], [0065]-[0067], [0083], [0095] and [0102]; table 2 and figures 1-2. | 7 |
| Y | | 1-6 |
| Y | JP 05-302073 A (TOYODA GOSEI CO., LTD.) 16 November 1993 (1993-11-16)<br>See paragraphs [0010]-[0011]. | 1-6 |
| Y | JP 2020-152862 A (MITSUBISHI CHEMICAL HOLDINGS CORPORATION) 24 September 2020 (2020-09-24)<br>See paragraph [0028]. | 5 |
| A | KR 10-2020-0036536 A (POSCO) 07 April 2020 (2020-04-07)<br>See paragraphs [0022], [0046]-[0056], [0065], [0087] and [0089], table 1 and figure 1. | 1-7 |

| ✓ Further documents are listed in the continuation of Box C. | ✓ See patent family annex. |
|---|---|

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **23 March 2022** | **24 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
|---|
| **PCT/KR2021/019437** |

**C. DOCUMENTS CONSIDERED TO BE RELEVANT**

| Category* | Citation of document, with indication, where appropriate, of the relevant passages | Relevant to claim No. |
|---|---|---|
| A | JP 2016-009710 A (JFE STEEL CORPORATION) 18 January 2016 (2016-01-18)<br>See paragraphs [0035]-[0042] and figures 1-3. | 1-7 |

Form PCT/ISA/210 (second sheet) (July 2019)

**INTERNATIONAL SEARCH REPORT**
Information on patent family members

International application No.

**PCT/KR2021/019437**

| Patent document cited in search report | | | Publication date (day/month/year) | Patent family member(s) | | | Publication date (day/month/year) |
|---|---|---|---|---|---|---|---|
| KR | 10-2019-0077985 | A | 04 July 2019 | KR | 10-2033029 | B1 | 16 October 2019 |
| JP | 05-302073 | A | 16 November 1993 | | None | | |
| JP | 2020-152862 | A | 24 September 2020 | | None | | |
| KR | 10-2020-0036536 | A | 07 April 2020 | CN | 113165331 | A | 23 July 2021 |
| | | | | EP | 3858601 | A1 | 04 August 2021 |
| | | | | US | 2022-0001646 | A1 | 06 January 2022 |
| | | | | WO | 2020-067703 | A1 | 02 April 2020 |
| JP | 2016-009710 | A | 18 January 2016 | JP | 6086098 | B2 | 01 March 2017 |

Form PCT/ISA/210 (patent family annex) (July 2019)